# EUROPEAN PATENT APPLICATION

(11) **EP 3 255 109 A1**
(43) Date of publication of application: **13.12.2017**
(21) Application number: 17020086.9
(22) Date of filing: 04.03.2017
(51) Int. Cl.: C09D 5/08, C09D 183/04, C08L 83/04

(54) **CHALK-, LIME- AND DEPOSIT-FREE COATINGS FOR WET/DRY SURFACES**

(30) Priority: 19.03.2016 DK 201600172
(71) Applicant: Bier, Kurt Emil Guido, 2100 Koebenhavn Oe (DK)
(72) Inventor: Bier, Kurt Emil Guido, 2100 Koebenhavn Oe (DK)

(57) **Abstract**

The invention exploits the expansion and contraction of hydrophilic rubbers, plastics and other polymers to prevent the formation of chalk, lime and other deposits on surfaces that reside in environments subject to dry-wet cycles.

## Description

### Field of the invention

The invention relates to the, typically unwanted, deposition of chalk, lime and other deposits on surfaces that are subject to dry-wet cycles. The invention relates to the avoidance of such deposit formation.

### Background of the invention

It is often the case that water deposits chalk and lime on surfaces which is unwanted such as on shower heads, electric kettles, water installations, tiles, and other surfaces that reside in a dry-wet cycle environments. The chalk and lime formation can be unwanted due to numerous reasons, hereunder aesthetics, clogging (e.g. on shower heads), reduction of heat transmission (e.g. in kettles), and alterations of other physical properties that change with the formation of chalk or lime. Furthermore, other deposits such as paint on walls etc. can also be unwanted, e.g. graffiti. The invention relates to deposits formed on any surface that reside in dry-wet cycle environments.

### Summary of the invention

The invention prevents the deposition of chalk, lime and other deposits on surfaces subject to a dry/wet cycle. The principle of the invention is based on the expansion or contraction of rubber, plastics and other polymers with hydrophilic properties when in contact with water. Rubber, plastics and polymers can expand/contract when water is absorbed to them/evaporated from them. Chalk, lime and many other deposits (such as paint) have very low breakage points for expansion/contraction and will thus break into pieces if expanded/contracted sufficiently. The invention treats surfaces with rubber, plastics or polymers that will expand and contract during wet/dry cycles, resulting in the breakage of any formed chalk, lime or other deposits on these materials thus preventing any large deposits.

This invention uses rubbers, plastics and other polymers with hydrophilic contents or rubbers, plastics and polymers to which hydrophilic properties have been added by chemical or physical alterations, including the simple addition of hydrophilic elements to the rubbers, plastics or polymers. These products expand when in contact with water and contract when the water evaporates. The invention does not claim any new materials, but their use in the prevention of the formation of chalk, lime and other deposits. These rubbers, plastics and other polymers can be made to expand more than 500 % depending on the modifications. A preferred embodiment of such a product is silicone rubber with super-absorbing polymers (SAPs) and/or emulsifiers which make a bridge between the extremely hydrophobic rubber, plastic or polymer and the extreme hydrophilic super-absorbing polymers (SAPs) or similar materials with hydrophilic properties.

The invention is the use of the above materials to prevent chalk, lime and other deposits. For example:
1. In shower-heads, nozzles made of the above-mentioned materials will prevent clogging of the shower-head. The nozzles will need firm support.
2. In electric kettles, the inside of the kettle can be coated with the above-mentioned materials preventing lime formation.
3. For tap/faucet-aerators, the area near the tap end can be made of the above-mentioned materials, preventing chalk- and lime-formation.
4. Tiles and other materials where chalk and lime is a problem can be coated with the above-mentioned materials to prevent the deposits.
5. Other deposits on surfaces subject to dry-wet cycles can be easily washed off with water if treated with the above-mentioned materials, examples include graffiti.

## Claims

1. The use of materials such as rubbers, plastics and other polymers with inherent or added hydrophilic properties, which expand when wet and contract when drying, to prevent the formation of chalk, lime or other deposits in environments subject to dry-wet cycles.

2. Production of full elements in the materials described in claim 1.

3. Surface-treatment with materials described in claim 1.
